# EUROPEAN PATENT APPLICATION

(11) **EP 2 145 860 A1**
(43) Date of publication of application: **20.01.2010**
(21) Application number: 09165846.8
(22) Date of filing: 17.07.2009
(51) Int. Cl.: C03B 9/16, C03B 9/193, C03B 9/453

(54) **Forming section of a hollow glass items production machine and relevant support structure**

(30) Priority: 17.07.2008 IT TO20080551
(71) Applicant: Bottero S.p.A., 12100 Cuneo (IT)
(72) Inventor: Balbi, Mario, 12100 Cuneo (IT)
(74) Representative: Jorio, Paolo

(57) **Abstract**

In a machine for forming glass items, a forming section (1) has a forming assembly (9), and a bottom support structure (2) for supporting the forming assembly (9), which in turn has a rough mold (13); a finish mold (14); a transfer assembly (19) for transferring at least one glass mass being formed from the rough mold to the finish mold; an extractor (22) for extracting at least one glass item from the finish mold; a glass mass guide device (15), a mold closing device (16), and a punching device (18) associated with the rough mold; and a pneumatic blower device (20) and cooling device (21) associated with at least the finish mold; the bottom support structure (2) having a bottom hollow frame (4), and at least one top plate (5) separate from the bottom frame (4) and on which the whole forming assembly (9) rests and is connected.

## Description

The present invention relates to a forming section of a machine for producing hollow glass items.

Glass items are known to be formed using what are commonly known as I.S. forming machines, which comprise a number of forming sections, each operating independently of the others to form a respective succession of glass items.

Accordingly, each forming section comprises a rough mold assembly and a finish mold assembly, each comprising a mold, a respective mold opening/closing device, and a respective mold cooling assembly. Each forming section also comprises a handling assembly for removing the glass items from the rough mold and transferring them to the finish mold; and a handling assembly for removing the items from the finish mold and depositing them onto a supporting surface, from which they are then transferred by a push assembly onto a common unloading conveyor. Each section also comprises a number of forming mechanisms associated with the molds, and which include a funnel mechanism and a stopper mechanism associated with the rough mold to feed the gobs into, and close the top of, the rough mold; a punch assembly for forming a cavity inside the glass mass inside the rough mold; and a pneumatic blowing and cooling head assembly associated with the finish mold to force the glass mass onto the finish mold walls and cool the finish mold.

In known solutions, the molds and the above assemblies and mechanisms of each section are all connected directly or indirectly, by separate interface elements, to a respective hollow parallelepiped supporting body underneath, which is separate from the hollow parallelepiped supporting bodies of the other sections. To ensure the necessary positioning tolerances between the various assemblies and mechanisms of the section, each parallelepiped body, after being rough-molded in a dedicated mold, is machined also as a function of the assemblies and mechanisms it is to support, and as a function of the corresponding interface elements, and is then placed on a base common to all the sections, and positioned contacting the hollow parallelepiped body of the adjacent section. At which point, the relative molds, assemblies, and mechanisms are fitted and connected individually and successively to the hollow parallelepiped body underneath, to form a dedicated forming section for a specific item.

Though widely used, known sections of the above type are increasingly unsatisfactory, especially in terms of production cost, assembly time and replacement and/or production changeover time.

This is mainly due to the way in which the assemblies/mechanisms are connected to the parallelepiped supporting body underneath, which makes painstaking work of changing individual assemblies and/or mechanisms, removal of which sometimes also involves removing all or part of one or more adjacent components. Moreover, because of the way in which the assemblies/mechanisms are connected to the parallelepiped supporting body underneath, the time taken to reassemble or reconfigure the section is no longer acceptable.

Finally, connecting the assemblies/mechanisms to the parallelepiped body underneath, and connecting the parallelepiped body to those of the adjacent sections necessarily call for precise machining of the molded or welded parallelepiped body, thus further increasing production time and cost and the final production cost of the section.

It is an object of the present invention to provide a forming section of a machine for producing hollow glass items, designed to provide a straightforward, low-cost solution to the above problems.

According to the present invention, there is provided a forming section of a hollow glass items production machine; the forming section having forming means comprising a rough mold , a finish mold, handling means for the rough mold and the finish mold, first transfer means for transferring at least a glass mass being formed from the rough mold to the finish mold, second transfer means for extracting at least a glass item from the finish mold, means for the guiding of the glass mass, for the closing of the mold and for the punching associated to said rough mold, and blowing and cooling pneumatic means, as well as a support structure for said forming means, **characterized in that** said support structure comprises a bottom hollow frame and top support plate means other than said bottom hollow frame and on top of which all said forming means rest.

In the forming section defined above, the forming means are preferably connected solely to the support plate means, and releasable connection means are conveniently interposed between said bottom hollow frame and said top support plate means to permit removal of said support plate means together with said forming means.

The support plate means preferably comprise a single support plate; and hooking means for lifting said support plate means, together with said forming means, in a substantially vertical direction with respect to said bottom hollow frame.

The present invention also relates to a hollow support structure for a forming section of a machine for producing hollow glass items.

According to the present invention, there is provided a hollow support structure for a forming section of a hollow glass items production machine, the support structure comprising a bottom hollow frame and one single top bored plate other than said bottom hollow frame, the top bored plate being releasably connected to the bottom hollow frame and adapted to support the glass items forming means.

A non-limiting embodiment of the invention will be described by way of example with reference to the accompanying drawings, in which:
Figure 1 shows an exploded view in perspective of the glass item forming section according to the present invention;
Figure 2 shows a view in perspective of two independent portions of the forming section disconnected and detached from each other;
Figure 3 shows a partial view of a number of adjacent forming sections according to the present invention.

Number 1 in the accompanying drawings indicates as a whole a forming section of a machine for producing hollow glass items.

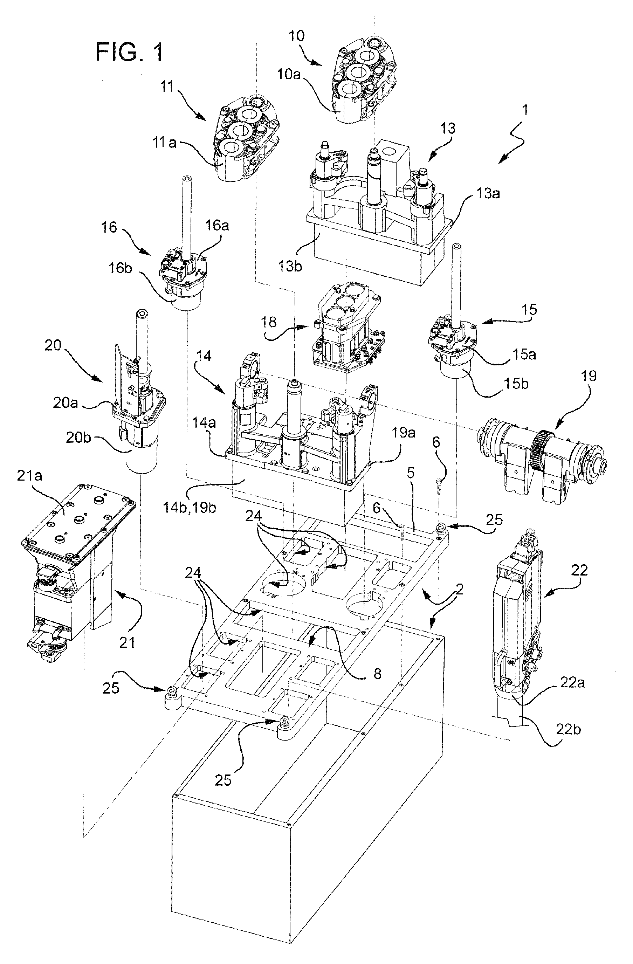

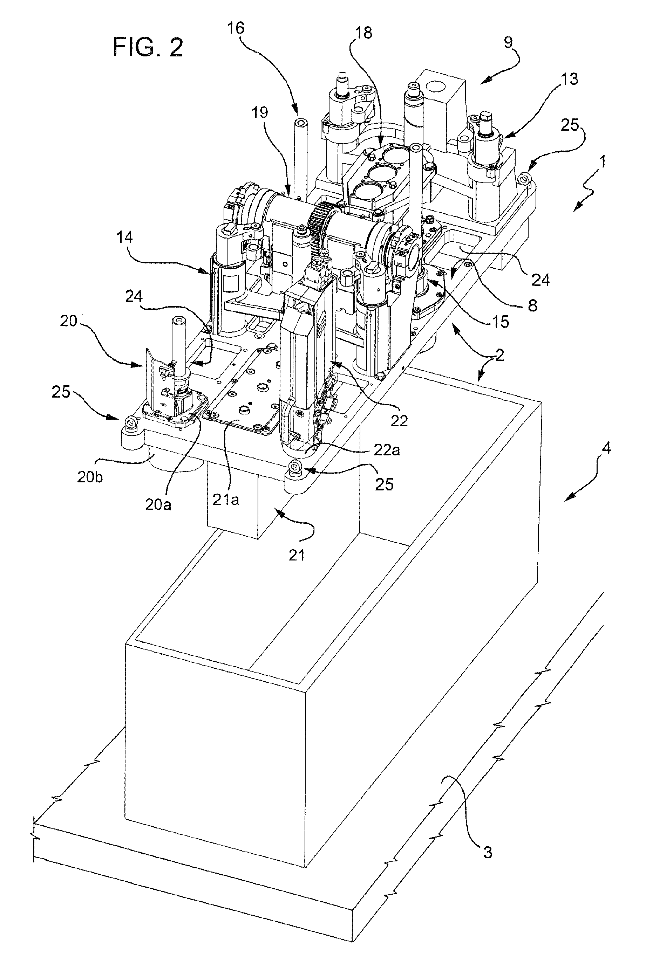

As shown in Figures 1 and 2, section 1 comprises a support structure 2 positioned, in use, on a shared base 3 (shown partly) of the machine, and in turn comprising a bottom frame, conveniently defined by a hollow one-piece parallelepiped body 4, and a single top supporting and connecting plate 5. In the example described, plate 5 is formed in one piece, and simply rests on hollow body 4 underneath, to which it is connected releasably by a number of screws 6 screwed and unscrewed from the top of section 1. Alternatively, in a variation not shown, plate 5 is connected to bottom hollow body 4 by a fast-fit connecting device.

Plate 5 defines a supporting surface 8 for an assembly 9 of component parts (Figure 2) for producing or forming items from insertion of a glass gob to extraction of the finished item.

With reference to Figures 1 and 2, assembly 9 comprises a rough mold 10 and a finish mold 11, in turn comprising two respective half-molds 10a and 11a. Half-molds 10a and 11a are movable over plate 5 by respective mold opening/closing or handling assemblies 13 and 14 also forming part of assembly 9. Assembly 9 also comprises a funnel device 15 (shown partly) which is associated with an inlet of the rough mold to guide the molten glass gob/s from a known dispenser (not shown) into rough mold 10. Assembly 9 also comprises a stopper device 16 for closing the inlet of rough mold 10; and a punch assembly 18 with or without a blowing device, and housed beneath half-molds 10a. As shown in the accompanying drawings, assembly 9 also comprises a transfer assembly 19 for transferring the items from rough mold 10 to finish mold 11; and a blower device 20 associated with the inlet of finish mold 11. Also associated with finish mold 11, assembly 9 also comprises a mold cooling assembly 21; and an extractor 22 for extracting the items from finish mold 11 and transferring them onto a supporting surface, from which they are then removed by a push assembly not shown.

Mold opening/closing assemblies 13, 14, funnel device 15, stopper device 16, the blower device, mold cooling assembly 21, punch assembly 18, transfer assembly 19, blower device 20, and extractor 22 comprise respective outer lateral flanges 13a, 14a, 15a, 16a, 19a, 20a, 21a, 22a, each resting on plate 5; and respective bottom portions 13b, 14b, 15b, 16b, 19b, 20b, 21b, 22b, which extend inside bottom hollow body 4 through respective through openings 24 in plate 5, and are connected to plate 5 by respective screws.

When assembling section 1 or making a production changeover, assembly 9 is first formed on plate 5, disconnected from bottom hollow body 4 and outside the machine, by simply inserting bottom portions 13b, 14b, 15b, 16b, 19b, 20b, 21b, 22b axially inside respective through openings 24 in plate 5, and securing the various devices and assemblies to plate 5 using the relative screws. At this point, plate 5, together with the whole of forming assembly 9, is simply raised, by suspending it, for example, from eyelets 25 projecting upwards from various points on plate 5, is positioned over bottom hollow body 4, is eased onto bottom hollow body 4, and is connected firmly to the bottom hollow body using screws 6. Once the necessary electric and pneumatic connections are made, section 1 is ready to receive at least one mass of molten glass and turn out a finished glass item. If, for any reason, one or more assemblies or devices should need changing during operation of section 1, these can be extracted individually, with the plate still connected to bottom hollow body 4, by simply unscrewing the relative screws and extracting the part to be changed upwards, with no need to remove any adjacent parts.

In a variation not shown, plate 5 is replaced by two side by side supporting plates resting on hollow body 4 underneath and connected to hollow body 4 by screws or other equivalent fast-fit connecting devices. By appropriately designing the two supporting plates, the various assemblies and/or devices can thus be divided into two or more assemblies/devices to make them even faster and easier to change, in the event only some of the assemblies/devices need changing.

That is, by removing one of the plates, the assemblies/devices fitted to that particular plate can be removed, while leaving the assemblies/devices on the other plate connected to the section.

Regardless of whether it features one plate or a number of side by side supporting plates, forming section 1 described provides, above all, and as compared with known solutions, for drastically reducing assembly and production changeover time and cost, as well as the time taken to change individual component parts, by virtue of the various assemblies/devices being connected solely to the removable top plate/s, as opposed to the hollow body underneath, as in known solutions.

The saving in the time and cost of assembling or reconfiguring each section is far from negligible when it comes to assembling or reconfiguring the machine, which, as is known, may comprise as many as twelve adjacent sections.

Using one or more plates for supporting and connecting assembly 9 also simplifies bottom hollow body 4, and eliminates the need for various, at times complicated, machining of bottom hollow body 4.

Bottom hollow bodies 4 of the various sections of the machine are arranged, in use, side by side on base 3 and connected firmly to one another.

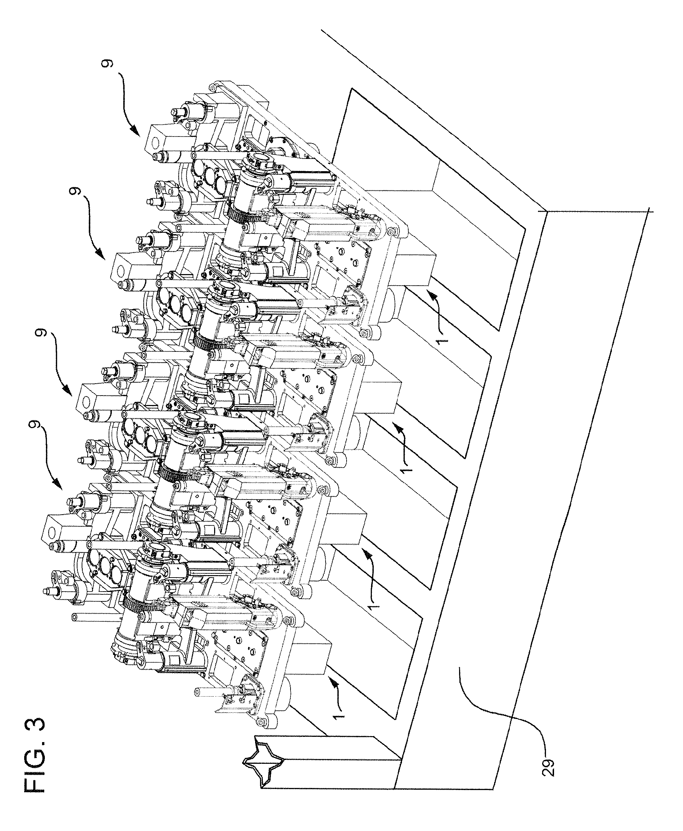

Alternatively, in the Figure 3 variation, the bottom hollow bodies form part of a single one-piece body 29 common to all of sections 1, as shown in Figure 3. The common one-piece body 29 thus also serves as a base, and hence as a one-piece structural casing, so the conventional base 3 can be eliminated, thus further reducing assembly time and cost, and greatly improving the structural stability of the machine as a whole.

Clearly, changes may be made to section 1 as described herein without, however, departing from the protective scope as defined in the independent Claims.

In particular, at least funnel assembly 15 and stopper assembly 16 may form part of a single mechanism, as opposed to two separate mechanisms.

## Claims

1. A forming section of a hollow glass items production machine; the forming section having forming means comprising a rough mold , a finish mold, handling means for the rough mold and the finish mold, first transfer means for transferring at least a glass mass being formed from the rough mold to the finish mold, second transfer means for extracting at least a glass item from the finish mold, means for the guiding of the glass mass, for the closing of the mold and for the punching associated to said rough mold, and blowing and cooling pneumatic means, as well as a support structure for said forming means, **characterized in that** said support structure comprises a bottom hollow frame and top support plate means other than said bottom hollow frame and on top of which all said forming means rest.

2. The section according to claim 1, **characterized in that** said forming means are connected exclusively to said support plate means.

3. The section according to claim 1 or 2,
**characterized by** comprising releasable connection means interposed between said bottom hollow frame and said top support plate means to allow the removal of said support plate means together with said forming means.

4. The section according to claim 3, **characterized by** further comprising hooking means for the lifting of said support plate means together with said forming means with respect to said bottom hollow frame.

5. The section according to any one of the preceding claims, **characterized in that** said support plate means comprise a plurality of through openings; at least part of said forming means extending across said through openings by sliding in a substantially vertical direction.

6. The section according to any one of the preceding claims, **characterized in that** said top support plate means comprise only one rigid support plate.

7. The section according to any one of claims from 1 to 5 , **characterized in that** said top support plate means comprise a first and at least a second support plate one next to the other; said forming means being arranged on said two plates.

8. The section according to any one of the preceding claims, **characterized in that** said bottom hollow frame is part of a body madein an one piece and is also common to a plurality of forming sections one next to the other.

9. The section according to any one of the preceding claims, **characterized in that** said body made in an one piece is a monolithic piece formed in the mold.

10. A hollow support structure for a forming section of a hollow glass items production machine, the support structure comprising a bottom hollow frame and one single top bored plate other than said bottom hollow frame, the top bored plate being releasably connected to the bottom hollow frame and adapted to support the glass items forming means.

11. A hollow glass items production machine comprising a plurality of forming sections each realized according to claim 1; **characterized in that** the bottom hollow frame is part of the one monolithic hollow body common to at least part of said forming sections.

12. The machine according to claim 11,
**characterized in that** said one hollow monolithic body defines a structural skirt of said machine.
